# FASCICULE DE BREVET EUROPEEN

(11) **EP 2 599 192 B1**
(45) Date de publication et mention de la délivrance du brevet: **10.09.2014**
(21) Numéro de dépôt: 11740879.9
(22) Date de dépôt: 27.07.2011
(51) Int. Cl.: H02K 11/00, H02K 15/16, H02K 24/00

(54) **MONTAGE D'UN RÉSOLVEUR DANS UNE MACHINE ÉLECTRIQUE TOURNANTE**
INSTALLATION EINES DREHMELDERS IN EINER ELEKTRISCHEN DREHMASCHINE
INSTALLATION OF A RESOLVER IN A ROTATING ELECTRICAL MACHINE

(30) Priorité: 30.07.2010 FR 1056328
(43) Date de publication de la demande: 05.06.2013
(73) Titulaire: Compagnie Générale des Etablissements Michelin, 63000 Clermont-Ferrand (FR); MICHELIN Recherche et Technique S.A., 1763 Granges-Paccot (CH)
(72) Inventeur: VEDY, Bertrand, CH-63040 CLERMONT-FERRAND Cedex 9 (CH)
(74) Mandataire: Roussy, Delphine
(86) Numéro de dépôt international: PCT/EP2011/062909
(87) Numéro de publication internationale: WO 2012/013705

(56) Documents cités:
- WO-A1-2010/026159
- DE-A1-102006 017 005
- US-A1- 2007 205 679

## Description

### DOMAINE DE L'INVENTION

La présente invention est relative aux machines électriques tournantes. Elle concerne notamment des machines capables de mettre en oeuvre des puissances élevées dans un format compact en vue d'applications dans le domaine des transports, comme l'automobile par exemple, pour assurer la traction mais aussi éventuellement le freinage des véhicules qui en sont équipés.

### ETAT DE LA TECHNIQUE

Les propositions de véhicules électriques se sont multipliées ces dernières années. On a vu apparaître des machines électriques dont la puissance peut atteindre par exemple 20, voire 30 kW dans un encombrement compatible avec l'intérieur d'une roue de véhicule ou son environnement immédiat dans le cas d'un véhicule comprenant une machine électrique pour chaque roue. Compte tenu de la puissance électrique importante mise en oeuvre par ces machines dans un espace restreint, l'agencement des organes fonctionnels tels que le stator, le rotor et les éléments accessoires nécessaires au pilotage de la machine à l'intérieur de la carcasse reste une préoccupation essentielle pour les concepteurs.

Selon un mode de construction connu une machine électrique bien adaptée aux nouvelles applications à l'automobile comprend un stator logé dans un boîtier ou une enveloppe comprenant un fourreau de telle façon que les parties terminales de ce dernier s'étendent axialement vers l'extérieur au delà des extrémités du circuit magnétique statorique qui constitue la partie active du stator. Ce circuit magnétique est composé de conducteurs électriques logés dans des encoches qui forment des enroulements dont les extrémités viennent se raccorder électriquement à un connecteur ou boîtier de connexion approprié. La connexion électrique des enroulements entre eux et avec l'extérieur permet, suivant le cas, soit de produire un couple de traction sur le rotor et fonctionner en moteur pour entraîner les roues du véhicule lorsque le circuit de ces enroulements est branché sur une alimentation alternative triphasée, soit de produire une énergie électrique triphasée si les enroulements de la machine sont branchés pour lui permettre de fonctionner en génératrice dans les phases de freinage.

Afin de permettre de contrôler le fonctionnement de la machine avec précision, il est courant de l'équiper d'un resolver (ou résolveur) qui fournit à chaque instant la position angulaire du rotor par rapport au stator correspondant. Le résolveur comprend un rotor monté sur l'arbre de la machine pour tourner dans un stator de résolveur à l'intérieur du boîtier machine. L'arbre de la machine électrique entraîne en tournant le rotor de résolveur et le stator associé produit un signal électrique alternatif dont les caractéristiques de phase reflètent fidèlement et instantanément les changements de position angulaire du rotor de la machine. Dans une machine électrique auto pilotée, ce signal est utilisé pour asservir le courant dans les enroulements du stator au maintien d'un écart angulaire optimum (typiquement en quadrature) entre le champ magnétique tournant dans le stator et le champ magnétique engendré entre les pôles du rotor.

Selon une forme de réalisation décrite par exemple dans la demande de brevet internationale N° WO2010026159 l'arbre machine est monté sur deux paliers de rotation dans le boîtier de la machine. Un premier palier est fixé d'un côté du stator machine au centre d'un flasque à une première extrémité du boîtier. De l'autre côté du stator un deuxième flasque est fixé au boîtier, qui supporte un deuxième palier traversé par un prolongement de l'arbre machine. Le rotor de résolveur est monté sur ce prolongement et tourne à l'intérieur du stator de résolveur lui-même fixé à l'intérieur du boîtier machine. Dans la réalisation décrite par le document précité, le deuxième flasque comprend une une portée pour le deuxième palier. A partir de cette portée, il se prolonge à l'intérieur du boîtier par une paroi creuse à l'intérieur de laquelle est logé le stator du résolveur avec son rotor associé. A sa périphérie, cette paroi vient se fixer à la deuxième extrémité du boîtier machine.

Dans la machine du document mentionné ci-dessus, le logement du resolver dans ladite paroi creuse est normalement fermé par un couvercle qui bloque axialement le stator du résolveur dans le sens axial interne contre une butée annulaire autour de la portée de montage du deuxième palier de l'arbre machine dans le deuxième flasque. Le diamètre interne de cette butée annulaire est supérieur au diamètre externe du rotor de resolver de manière à permettre en cas de besoin d'extraire le rotor de résolveur de son stator en le déplaçant dans le sens axial vers l'intérieur du stator de la machine, à travers l'ouverture formée dans cette butée annulaire. Cette disposition permet donc, moyennant un agencement convenable des diverses pièces tournantes montées le long de l'arbre machine, de démonter l'équipage mobile formé par l'arbre machine et les pièces qu'il supporte en faisant glisser ledit arbre à travers le stator de la machine et une ouverture dégagée dans la première extrémité du boîtier par le démontage du premier flasque porteur du premier palier.

Le résolveur peut être installé dans la machine après le premier montage de l'arbre machine dans le boîtier, opération au cours de laquelle le prolongement de l'arbre destiné à supporter le rotor de résolveur a été engagé, à travers un passage dans le deuxième palier de l'arbre machine, dans le logement du résolveur. Le rotor de résolveur est engagé sur ledit prolongement d'arbre, puis on monte le stator de résolveur que l'on bloque axialement comme il a été dit plus haut. Il reste alors à effectuer le réglage ou calage angulaire du stator et du rotor l'un par rapport à l'autre et à l'arbre machine en fonction des signaux produits par le stator de la machine au cours de la rotation de l'arbre. Plusieurs techniques existent à cet effet.

Dans la disposition décrite par la demande de brevet internationale précédemment citée, la fixation du rotor de résolveur sur l'arbre machine s'effectue à l'aide d'une bague de friction qui laisse au monteur la faculté de modifier la position angulaire du rotor sur l'arbre en lui appliquant un couple de rotation approprié pour surmonter la résistance de la bague de friction tandis que la rigidité de frottement de cette dernière est suffisante pour empêcher tout dérèglement intempestif du rotor, quels que soient les couples auxquels il puisse être soumis en fonctionnement normal. Le stator quant à lui est fixé une fois pour toutes dans sa position à l'intérieur du boîtier. D'autres modes de réglage ou calibration du résolveur existent dans lesquels le rotor est calé dans une position angulaire fixe donnée sur l'arbre machine et c'est la positon angulaire du stator qui en fin de montage du résolveur est ajustée par un mouvement de rotation jusqu'à ce que le niveau de signal recherché soit obtenu à la sortie des bobinages du stator. La position du stator est alors fixée par un système de serrage empêchant sa rotation en fonctionnement normal. Des réalisations de dispositifs de réglage angulaire de la position d'un resolver sont par exemple décrites dans la demande de brevet US 2006/226719 du 12 octobre 2006.

La disposition qui vient d'être rappelée, à propos de la demande de brevet internationale précitée, pour le montage d'un résolveur dans une machine électrique, est intéressante car elle permet d'opérer facilement et simplement le démontage et le remontage des parties mobiles de la machine après son installation et sa mise en fonctionnement. En effet, une fois le rotor de résolveur en place au bout de l'arbre machine, il suffit de démonter le premier flasque pour libérer l'ouverture à la première extrémité du boîtier et faire glisser longitudinalement l'équipage formé par l'arbre machine avec toutes les pièces qui y sont fixées ou autrement installées pour les sortir du boîtier machine par cette ouverture. Le remontage s'effectue en sens inverse. Un nouveau réglage du résolveur n'est pas nécessaire après le remontage avant la remise en fonctionnement de la machine.

L'expérience a cependant fait parfois apparaître une difficulté lors du remontage, en raison du nombre de pièces de l'équipage mobile constitué par l'arbre qui doivent être associées avec leur homologues dans les parties fixes de la machine. En particulier, le centrage précis de certaines parties mobiles par rapport aux parties statiques correspondantes dans le boîtier peut s'avérer délicat. Dans ces conditions le remontage peut nécessiter davantage de temps qu'il ne serait souhaitable avant que l'arbre machine et les autres pièces se présentent dans des positions favorables à leur introduction complète en position opérationnelle avec leurs homologues fixes. Il peut aussi exister un risque d'endommager certaines pièces au cours des manipulations et tâtonnements nécessaires aux opérations de centrage et d'alignement.

### EXPOSE DE L'INVENTION

Face à cette difficulté, on a cherché à aménager, conformément à l'invention, la disposition des pièces montées sur l'arbre d'une machine électrique et des pièces fixes qui leur correspondent dans le boîtier de la machine afin de permettre le démontage et le réassemblage simplifié de ces pièces, en minimisant les difficultés d'ajustement réciproque desdites pièces lors de l'introduction de l'arbre rotor dans le boîtier machine.

A cet effet, l'invention a pour objet une machine électrique tournante comportant un boîtier; un stator de machine fixé au boîtier; un rotor de machine dans le stator machine sur un arbre, ledit arbre définissant un axe de rotation de la machine, ledit arbre étant monté, d'un côté dudit rotor, dans un palier de rotation calé axialement sur l'arbre et centré dans une portée liée au boîtier dans laquelle le rotor peut être inséré dans le boîtier par un mouvement relatif entre stator et rotor parallèle à l'axe de la machine ; un passage interne, dans le boîtier, traversé par un prolongement dudit arbre au delà dudit palier de rotation ; et un résolveur comprenant un rotor de résolveur dont le diamètre externe est inférieur à celui dudit passage interne, qui est fixé sur ledit prolongement de l'arbre machine et propre à s'introduire dans la cavité d'un stator de résolveur lors dudit mouvement relatif, pour y constituer un entrefer de résolveur entre les parois radiales en regard desdits rotor et stator résolveur. Selon l'invention, ladite machine est caractérisée en ce que la distance D1, mesurée le long de l'axe de l'arbre, entre les positions (i) du point d'engagement de la paroi radiale externe du palier de rotation avec la portée correspondante dans le boîtier, qui est le plus avancé vers l'extrémité libre dudit prolongement, d'une part, et (ii) du point ou arête du secteur de diamètre maximum dans la paroi radiale externe du rotor résolveur, qui est le plus avancé vers l'extrémité libre dudit prolongement, d'autre part, est inférieure à la distance D2, mesurée axialement dans le boîtier, entre les positions (i) du point d'engagement de la paroi radiale interne de ladite portée avec la paroi radiale externe du palier de rotation, qui est le plus avancé dans la direction dudit stator machine, d'une part, et (ii) du point ou arête du secteur de diamètre minimum, dans la paroi radiale interne du stator résolveur, qui est le plus avancé dans la direction dudit stator machine, d'autre part.

Grâce à cette disposition, lorsque au montage ou au remontage, l'arbre machine pénètre longitudinalement dans le boîtier en déplaçant avec lui les pièces dont il est solidaire, notamment le palier de rotation et le rotor de resolver, la position axiale de l'arbre qui correspond à l'engagement du palier de rotation dans la portée correspondante peut être décalée, et spécifiquement avancée du côté stator machine, par rapport à celle qui correspond au début de l'engagement du rotor résolveur dans le stator résolveur. La disposition permet donc de réaliser le centrage de l'arbre par rapport au boîtier pour obtenir un engagement sans heurt et un glissement sans effort de la paroi du palier dans la portée correspondante avant que la position de l'arbre n'atteigne celle qui correspond à un engagement d'une autre pièces liée à l'arbre dans un autre pièce liée au boîtier.

Lors de l'assemblage ou du réassemblage d'une telle machine électrique, le rotor machine est entraîné longitudinalement par l'arbre machine à l'intérieur du stator jusqu'à occuper une partie de l'espace interne de celui-ci et tandis que le palier de rotation situé du côté du résolveur et le rotor résolveur, qui sont distribués le long de l'arbre machine, se rapprochent respectivement des pièces homologues dans le boîtier de la machine à savoir la portée du palier et le stator de resolver. Puis, l'arbre machine poursuivant sa course longitudinale, le palier de rotation va entrer au contact de la portée correspondante dans le boîtier et s'engager dans cette dernière. Le prolongement de l'arbre machine au-delà du palier de rotation, qui porte vers son extrémité le rotor de résolveur, traverse avec ce dernier un passage dans le boîtier qui débouche sur un espace dans lequel est logé le stator de résolveur. Grâce à la règle de construction exprimée dans la définition de l'invention exposée précédemment, par la relation entre les distances D1 et D2, l'engagement du palier de rotation dans sa portée de palier intervient avant que le rotor de résolveur ne parvienne au niveau du stator de résolveur. En particulier, l'écart entre les distances D1 et D2 est choisi de telle façon que le palier de rotation soit suffisamment engagé dans la portée correspondante pour que l'arbre machine puisse être parfaitement centré dans le boîtier en dépit du jeu qui existe inévitablement entre les parois radiales en regard du rotor et du stator machine, et cela, avant que l'arbre ne parvienne dans une position longitudinale où un deuxième couple de pièces fonctionnelles mâle- femelle, par exemple les rotor et stator de résolveur, arrive en position d'engagement réciproque.

La présence de l'entrefer de la machine implique l'existence d'un jeu radial entre ces deux parois. On conçoit donc que lorsque le rotor machine commence à pénétrer dans le stator au début du montage ou remontage, comme il a été indiqué plus haut, le jeu de ces deux pièces ne garantisse pas naturellement un parfait centrage de l'arbre rotor. Ceci est d'autant plus le cas que, dans la plupart des machines électriques tournantes du type évoqué ci-dessus et notamment des machines pilotées à l'aide d'un résolveur, les parois radiales en regard du stator et du rotor subissent des efforts magnétiques, même au repos, qui tendent à s'opposer normalement aux petits déplacements requis pour centrer correctement le rotor à l'intérieur du stator. Avec le dimensionnement selon l'invention, l'opérateur est donc est assuré de pouvoir mettre en oeuvre les moyens de centrage du palier de rotation sans avoir à se préoccuper, à ce stade de la pénétration de l'arbre dans le boîtier, de l'assemblage des autres pièces fonctionnelles homologues et de bénéficier ensuite du centrage obtenu pour permettre l'autre ou les autres assemblages de pièces homologues sans difficulté lors de la poursuite du déplacement de l'arbre.

Selon un mode de réalisation préféré, la machine électrique tournante selon l'invention comprend en outre une interface de centrage entre le palier de rotation de l'arbre machine et la portée correspondante dans le boîtier, dans laquelle la paroi radiale externe du palier, du côté de l'extrémité libre du prolongement d'arbre, présente un premier secteur propre à entrer en contact avec un deuxième secteur dans la paroi radiale interne de la portée du palier de rotation du côté du stator machine dans le boîtier et l'un au moins desdits premier et deuxième secteurs est profilé avec un diamètre décroissant axialement dans la direction longitudinale allant de la machine vers le résolveur.

Grâce à cette disposition, lorsque le palier de rotation entre en contact avec la portée de palier sous l'effet du déplacement de l'arbre, deux surfaces dont l'une est capable de glisser sur l'autre à la manière d'une came agissent aux extrémités en contact de du palier et de la portée pour forcer l'arbre à se centrer à l'encontre des efforts magnétiques exercés entre le rotor et le stator jusqu'à ce qu'une portion de la paroi radiale externe du palier ait pénétré dans la surface radiale interne de la portée de palier sur une distance suffisante pour que le centrage de l'arbre soit assuré pour la suite de son déplacement longitudinal.

Selon une mode d'exécution avantageux, dans le deuxième secteur, la paroi radiale interne de la portée du palier de rotation a un diamètre décroissant axialement dans la direction longitudinale allant de la machine vers le résolveur.

Enfin, selon un mode de réalisation de l'invention, l'espace intérieur à ladite portée du palier de rotation dans le boîtier est limité axialement du côté opposé au stator machine par une butée en forme de couronne autour dudit passage traversé par l'arbre machine, dont le diamètre interne est supérieur au diamètre externe du rotor resolver mais inférieur au diamètre de la paroi radiale externe du palier de rotation.

### BREVE DESCRIPTION DES FIGURES

D'autres caractéristiques et avantages de l'invention ressortent de la description ci-après d'une ou plusieurs formes de réalisation, données à titre non limitatif, faite en référence aux dessins annexés, dans lesquels:
La figure 1 représente vue en coupe par un plan axial une machine électrique conforme à l'invention.
Les figures 2A, 3A, et 4A illustrent trois étapes successives du réassemblage des parties mobiles dans les parties fixes de cette machine après un démontage, en fonction de la progression de l'arbre de la machine à l'intérieur de son boîtier.
Les figures 2B, 3B et 4B représentent respectivement chacune une vue dilatée, ou à la loupe, des pièces en contact dans le cours des étapes d'assemblage des figures 2A, 3A et 4A.
La figure 5 est une vue avec un fort grossissement de la figure 3B.

### DESCRIPTION D'UN O U PL USIEURS EXEMPLES DE REALISATION

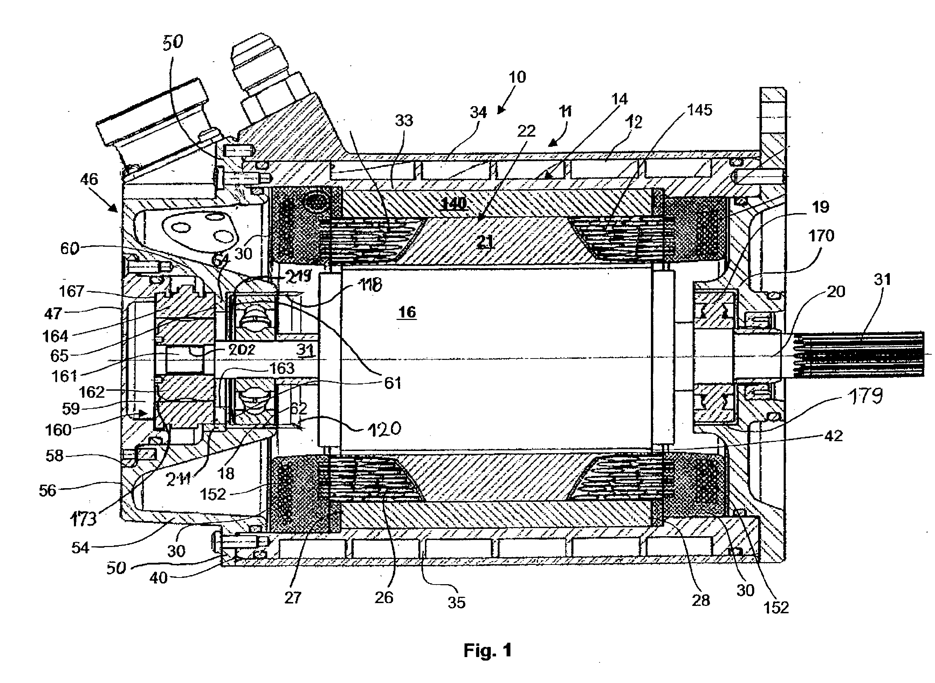

Une machine électrique synchrone 10 représentée à la figure 1 comprend une enveloppe ou boîtier 11 enfermant une carcasse métallique externe 12 à l'intérieur de laquelle sont logés un stator 14 et un rotor 16 tournant dans le stator autour d'un axe 20 à l'intérieur du stator. Le rotor est monté sur un arbre 31 engagé dans des paliers de roulement 18 et 19 axialement espacés de part et d'autre du stator. Le stator 14 comprend un circuit magnétique 22 formé par un empilement 21, généralement cylindrique, de tôles magnétiques. L'empilement 21 est creusé par une série d'encoches périphériques 26 qui courent dans une direction généralement longitudinale entre ses deux faces d'extrémité axiales opposées 27 et 28. Dans ces encoches 26 sont logés des conducteurs en cuivre 145, chacun replié en boucle au sortir d'une encoche dans une des faces 27 ou 28 afin de pénétrer dans une encoche voisine pour former un enroulement continu de bobine électrique. L'ensemble des enroulements ainsi constitués réalise trois bobines propres à être connectés électriquement en étoile à une source d'alimentation en énergie ou à un dispositif utilisateur de courant électrique alternatif triphasé, selon un montage bien connu pour ce type de machine. A chaque extrémité du stator 14, l'ensemble des boucles formées par les conducteurs 145 sortant des faces terminales 27 et 28 constitue un "chignon" 152 imprégné de résine dans un bloc terminal respectif 30 (figure 1).

Une culasse 140 constituée par un autre empilement cylindrique de tôles en forme de couronnes circulaires entoure l'empilement 21 et ferme les encoches en assurant la continuité du circuit magnétique 22. Le circuit magnétique 22 est percé axialement d'un canal cylindrique destiné à recevoir avec un entrefer calibré 42 le rotor 16. Ce dernier est composé d'un assemblage d'aimants permanents non représentés, calé en rotation sur l'arbre 31. De chaque côté du rotor est fixée sur l'arbre 31 la bague intérieure d'un des paliers 18 et 19, dont la bague extérieure vient s'insérer, au montage, dans une bague de support, respectivement 118 pour le palier 18 et 179 pour le palier 19, chacune solidaire du boîtier 11 de part et d'autre du stator 14.

Le stator 14 monté dans le boîtier 11 est logé dans une portion de la carcasse 12 formant un fourreau ou sleeve en deux manchons coaxiaux, l'un interne 33 et l'autre externe 34 . Dans l'espace cylindrique interne du manchon 33 est montée et bloquée en rotation la culasse 140 du circuit magnétique 22. On voit sur la figure 1 que la face radiale externe de la paroi du manchon 33 est garnie de nervures en hélice 35 qui ensemble participent à un circuit de circulation de fluide de refroidissement du corps de stator.

Les enroulements du circuit magnétique 22 comportent des conducteurs de connexion, non visibles sur la figure 1, qui sortent des encoches 26 à une extrémité du circuit magnétique 22 située à gauche sur la figure 1 dans cet exemple, pour être raccordés à l'extérieur de la machine. De ce même côté le fourreau de la carcasse 12 formé par l'assemblage des manchons 33 et 34 se termine axialement par une face annulaire 40 perpendiculaire à l'axe 20 dans une position axiale au voisinage de celle des extrémités des blocs de résine 30.

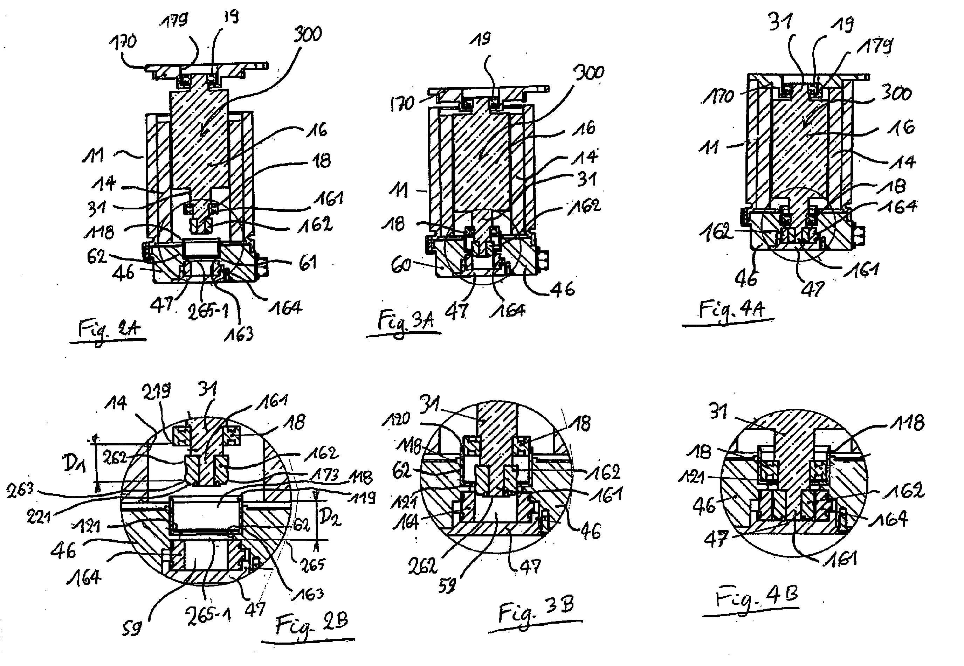

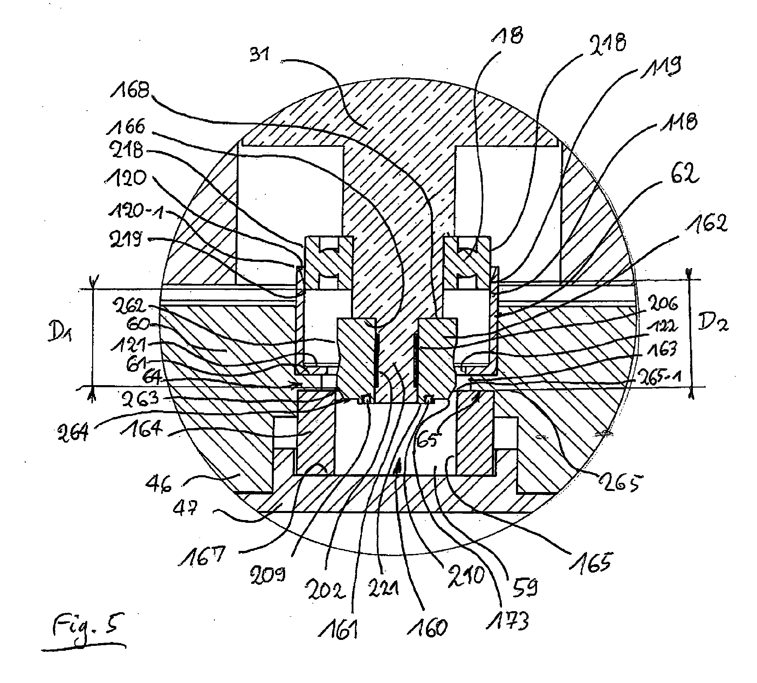

Sur la figure 1, on voit un capot creux 46, bordé par un collet annulaire 50 qui est boulonné dans la face d'extrémité annulaire 40 du fourreau 33, 34 pour fermer une extrémité axiale du boîtier 11. Le capot 46 présente une paroi cylindrique 54 qui raccorde le collet 50 à une face terminale 56 en forme de couronne circulaire au centre de laquelle s'ouvre un espace circulaire 59 dans le boîtier, normalement fermé par un couvercle amovible 47 vissé dans le capot 46. En partant du bord radial interne 58 de la face 56, la paroi du capot creux 46 se prolonge axialement vers l'intérieur de la machine par un élément de flasque 60 de forme généralement tronconique. A son extrémité axiale interne (voir aussi figure 5) cet élément de flasque 60 définit un logement délimité par une paroi cylindrique interne 62 dans lequel s'insère une bague 118 qui constitue la portée du palier de roulement 18 de l'arbre de rotor 31. La bague 118 est une sorte de coupelle dont la paroi cylindrique forme un coude radial interne à une extrémité pour se prolonger en une couronne circulaire 121, avec une ouverture 122 en son centre.(fig. 5). Cette couronne est elle-même en butée axiale externe contre une face latérale 61 d'un anneau 64 en saillie dans la paroi radiale interne 62 du logement de l'élément de flasque 60. Du côté opposé à la couronne circulaire 121, la paroi cylindrique de la bague 118 déborde légèrement hors du logement limité par la paroi 62 et sa paroi interne se termine par un biseau 120 jusqu'à une arête dans l'espace creux au centre du bloc de résine 30, face à une des extrémités du rotor machine, comme bien visible sur les figures 2 à 5.

Entre la saillie annulaire 64 et l'extrémité axiale du boîtier 11 du côté de la bague 118 par rapport au stator machine 14, la paroi radiale interne de l'élément de flasque 60 définit un logement de forme globalement évasée vers l'extrémité axiale externe du capot 46, qui débouche dans l'espace 59. Dans ce logement est monté un résolveur 160 comportant un rotor 162 fixé sur un prolongement 161 de l'arbre 31 du rotor, du côté du palier de roulement 18 opposé au rotor machine 16, et un stator de résolveur 164 dont les faces radiales en regard sont séparées, en position opérationnelle, par un entrefer 242 (figure 1). Le stator de résolveur 164 est bloqué axialement entre (i) la deuxième face latérale, désignée par la référence 65, de la saillie annulaire interne 64, opposée à la face 61 et tournée vers l'espace 59, et (ii) une surface d'appui 167 à l'intérieur du couvercle 47, autour de l'espace central 59, comme représenté. Comme indiqué ci-dessus, le couvercle 47 est vissé dans l'extrémité du capot 46. Une goupille 211 réalise le blocage en rotation du stator dans l'élément de flasque 60.

Entre ses deux faces latérales 61 et 65 (figures 1 et 5), l'anneau en saillie 64 est limitée par la surface cylindrique d'un alésage 163 qui est traversé en position assemblée par le prolongement 161 de l'arbre 31 sur lequel est monté le rotor 162 du résolveur. Les diamètres internes de cet alésage 163 et de l'ouverture 122 au centre de la couronne 121 sont supérieurs au diamètre extérieur du rotor 162 du résolveur, de façon à permettre à ce dernier de passer à travers la couronne et l'anneau en saillie 64, lorsqu'on l'extrait de sa position opérationnelle dans le stator 164 en déplaçant l'arbre 31 vers la droite de la figure 1. Il est ainsi possible de sortir tout l'équipage des pièces mobiles de la machine montées sur l'arbre 31 par l'extrémité du boîtier 11 opposée au capot 46, en cas de nécessité, après avoir ôté les vis de fixation du flasque 170 dans le fourreau 33, 34.

Ainsi, dans cet exemple, le stator 164 du resolver 160 est bloqué tant en rotation que dans le sens axial dans le boîtier de la machine. En revanche, le rotor du résolveur 160 est calé sur l'arbre 31 du rotor 16 dans une position angulaire ajustable, déterminée lors d'une opération de réglage ou calibration initiale, qui sert de référence pour transmettre, à chaque instant, une information au système de pilotage de la machine électrique sur la position angulaire du rotor de cette machine dans son stator, conformément au principe de fonctionnement connu des machines synchrones triphasées auto pilotées.

L'arbre machine 31 comporte à l'extrémité de son prolongement 161 un épaulement 166 tourné vers l'extérieur par rapport au rotor machine contre lequel vient s'appliquer la face axiale 168 du rotor de resolver 162 (cf. figure 5) tournée vers le rotor machine. Entre cet épaulement et son extrémité libre l'arbre 31 présente une portée mâle autour de laquelle est montée une bague de friction 202 par exemple à ressort. Le rotor de resolver 162 est percé d'un alésage central 206 qui est engagé sur ladite portée en bout du prolongement d'arbre 161, autour de la bague de friction 202. La face radiale externe de la bague 202 exerce un couple de friction sur le rotor 162, suffisant pour l'empêcher de tourner par rapport à l'arbre 31 en fonctionnement normal de la machine. Cependant, les efforts de frottement de la bague de friction 202 peuvent être surmontés pour les besoins du réglage lorsqu'on exerçe un couple différentiel suffisant, par exemple à l'aide d'un outil spécialement prévu à cet effet. A cet égard, la face terminale 221 du rotor résolveur, au bout du prolongement d'arbre 161, est munie de deux petits trous borgnes 209 et 210 formant un moyen de prise grâce auxquels un outil, non représenté, comportant deux broches propres à s'engager dans les deux trous borgnes, peut être couplé avec le rotor 162 pour le manoeuvrer en rotation aux fins du réglage de son orientation angulaire sur l'arbre de la machine 31. Un exemple de réalisation de ce mode de réglage du résolveur dans une machine électrique tournante est décrit en détail dans la demande de brevet internationale précitée N° WO2010026159.

Avant montage de la machine, certains éléments du stator machine ont été mis en place dans le boîtier et une imprégnation de résine a permis de consolider et d'isoler l'ensemble. On dispose d'un pré-assemblage statorique, y compris le capot 46, mais pas le flasque 170. Par ailleurs, le rotor a également été pré-assemblé, et l'arbre 31 du rotor 16 est introduit dans le flasque 170, ce qui donne un autre ensemble d'éléments pré-montés. Cet autre ensemble est engagé dans le pré-assemblage statorique. Dans un premier temps, le rotor a tendance à coller au stator par attraction magnétique, tant que le palier 18 n'est pas centré sur la bague 118. Le palier 18 ainsi mis en place vient s'engager complètement dans la bague 118 montée dans l'ouverture 62 de l'élément de flasque 60. Les conducteurs de liaison du stator de la machine sont raccordés à des connecteurs vers l'extérieur. L'extrémité du prolongement 161 de l'arbre 31 du rotor machine après avoir traversé les ouvertures centrales 122 et 163 dans l'élément de flasque 60 pénètre dans l'espace délimité radialement par la paroi radiale interne de ce flasque 60. Puis le capot est attaché à l'extrémité du fourreau 33, 34) par sa collerette. L'extrémité du prolongement d'arbre 161 fait alors saillie à l'intérieur de l'espace central 59 encore ouvert dans le capot 46. Dans cet exemple, le rotor 162 du resolver 160 peut alors être installé en forçant l'alésage interne 206 du rotor 162 autour de la bague de friction 202 jusqu'à ce que la face 168 vienne en butée contre l'épaulement 166. Le stator 164 est ensuite installé dans son logement contre la face latérale 65 de l'anneau 64 en saillie et bloqué en rotation avec une goupille 211. La figure 1 illustre la machine électrique assemblée.

Avant de fermer complètement le capot 46 par la mise en place du couvercle 47 et de bloquer complètement le stator résolveur dans le sens axial, on effectue le réglage de la position angulaire du rotor de resolver 162 par un ensemble de tests, en faisant tourner le rotor comme il a été expliqué jusqu'à une position qui pourra ensuite être conservée pendant toute la durée d'utilisation de la machine par l'effet du couple de frottement exercé par la bague de fixation du rotor de résolveur sur l'extrémité de l'arbre 31.

On remarque qu'une fois cette opération achevée, la disposition décrite ici permet d'effectuer certaines interventions, telles que des opérations de maintenance, par exemple, en sortant l'arbre 31 du boîtier (figure 1) du côté où la machine est fermée par un flasque 170 vissé sur l'autre face terminale du fourreau 33, 34, et dans lequel est aménagée la portée 179 du palier de roulement 19 de l'arbre 31. Le démontage du flasque 170 permet de désolidariser le rotor par rapport au stator et de libérer la partie droite de l'arbre 31. L'arbre machine 31 peut alors être extrait du boîtier 11 vers la droite sur la figure 1 en emmenant avec lui le rotor de résolveur 162 calé sur le prolongement 161 de l'arbre 31. Au cours de ce déplacement, le rotor de résolveur 162 passe à travers l'alésage 163, dont on a vu que le diamètre interne est supérieur au sien, et le palier 18 s'extrait de la bague ou coupelle 118, tandis que le rotor machine 16 se dégage du stator 14.

Lors du remontage des parties mobiles de la machine à l'intérieur du boîtier 11, dans lequel les parties fixes homologues sont déjà fixées, on commence par introduire l'extrémité gauche de l'arbre machine 31 (vue sur la figure 1) sur lequel ont été insérés tous les éléments qui constituent l'équipage 300 (fig. 2A à 4A) mobile en rotation durant le fonctionnement de la machine. Il s'agit, outre le rotor résolveur 162 et le rotor machine 16, du palier de rotation à billes 18 qui possède une cage à billes calée axialement sur le rotor 16 et dont la partie radiale externe s'insère au montage dans la bague de portée 118. A ce point, l'arbre 31 a atteint la limite de sa course à l'intérieur du boîtier 11 et tous les éléments qui y sont fixés doivent avoir fini de pénétrer dans les espaces prévus à leur intention à l'intérieur du boîtier 11. Il est intéressant de noter que dans cette situation le résolveur 160 conserve la position angulaire correspondant au réglage initialement effectué lors du premier montage par l'opération précédemment décrite. Le montage et le démontage peuvent être réitérés sans détruire le calage angulaire entre les deux rotors. Ceci permet de gagner un temps de réglage substantiel au remontage.

Conformément à un aspect important de l'invention, on prévoit de faciliter particulièrement l'opération de montage ou remontage par un agencement judicieux des pièces fonctionnelles alignées le long de l'arbre à l'intérieur de la machine. L'examen de la figure 5 permet de constater que la distance D1 qui sépare les positions suivant l'axe dudit arbre 31 du point ou de l'arête 219 d'engagement du palier de rotation 18 dans la bague de portée correspondante 118 et de l'arête 263 dont le diamètre est maximum dans la paroi radiale externe 262 du rotor résolveur 162 du côté de son extrémité libre est plus petite que la distance D2 qui sépare les positions, repérées axialement dans le boîtier 11, du point ou de l'arête d'engagement 119 de la portée 118 par le palier de rotation 18 et du plan 265 qui limite axialement la paroi radiale interne 165 du stator résolveur 164 du côté stator machine 14.

Pour plus de précision en ce qui concerne D1, le point ou arête 219 d'engagement du palier de rotation 18 est défini comme étant le point ou l'arête circulaire de la paroi radiale externe 218 du palier 18 qui est le plus avancé du côté de l'extrémité libre du prolongement 161 de l'arbre 31 et, par conséquent, qui est le premier à entrer en contact avec l'intérieur de la bague 118 au cours du déplacement longitudinal de l'arbre 31 dans le boîtier 11; le plan 263 à l'extrémité libre du rotor résolveur 162 est le plan qui limite axialement l'entrefer 242 résolveur à l'extrémité correspondante de la paroi radiale externe 262, ou plan limitant le secteur de la paroi radiale externe dont le diamètre est maximum du côté de l'extrémité libre dudit rotor 162. Pour plus de précision en ce qui concerne D2, le point ou l'arête d'engagement 119 de la portée 118 par le palier de rotation 18 est le point ou l'arête d'engagement de la paroi radiale interne (biseau 120) de la bague 118 qui est le plus éloigné, longitudinalement, de l'extrémité du boîtier 11 qui est située du même côté que le passage 163 pour le prolongement d'arbre 161 et, par conséquent, qui est le premier à être contacté par le palier de rotation 18 au cours du déplacement longitudinal de l'arbre 31 dans le boîtier 11 au montage; le plan 265 à l'entrée 265-1 du stator résolveur 164 est le plan qui limite axialement, en position assemblée, l'entrefer résolveur 242 dans la paroi radiale interne 165 du stator résolveur 164, du côté du stator machine 14.

Ainsi, lorsqu'au remontage de la machine, on déplace l'arbre 31 à l'intérieur du boîtier 11 pour amener les pièces mobiles dans leurs positions de fonctionnement respectives, la face axiale externe 218 du palier de rotation 18 atteint le plan de l'ouverture (biseau 120) à l'entrée dans la bague 118 dans une position longitudinale de l'arbre machine qui est décalée par rapport à la position du même arbre dans laquelle la face axiale externe 262 du rotor de résolveur 162 parvient à l'entrée 265-1 de son logement dans le stator 164 correspondant. Plus spécifiquement encore, dans l'exemple présenté, la face axiale externe 218 du palier de rotation rejoint l'entrée (biseau 120) de la bague porte palier 118 avant le moment où la face axiale externe 262 du rotor 162 de résolveur parvient à l'entrée 265-1 du stator 164. Le rotor 162 de résolveur reste donc à l'abri des contacts et des chocs avec son environnement au moment où le palier 18 est inséré dans la bague 118, ce qui nécessite une opération préalable de centrage de l'arbre 31 sur son axe 20 pour pouvoir engager précisément la face 218 de ce palier dans sa bague de portée 118. Les distances D1 et D2 sont choisies pour laisser un jeu longitudinal suffisant pour permettre d'effectuer radialement ce centrage du palier de roulement 18 à l'entrée de la portée d'appui 118, avant que l'extrémité axiale 263 du secteur de diamètre maximum dans la paroi radiale externe 262 du rotor résolveur n'atteigne l'entrée 265-1 du stator résolveur.

En se reportant à la figure 5, on constate que la paroi radiale interne (biseau 120) qui aboutit à l'entrée de l'ouverture 120-1 de la bague 118 est biseautée. Son diamètre interne se rétrécit vers l'intérieur de la bague jusqu'à coïncider avec le diamètre externe du palier 18 qui vient s'y insérer avec un jeu minimum en position finale. Ainsi lorsque l'arbre 31 est introduit progressivement, au montage dans le boîtier 11 à partir de son ouverture laissée libre de l'extrémité droite de la figure 1 en l'absence du flasque 70, la paroi cylindrique axiale externe 218 du palier 18 arrive dans le plan d'entrée de l'ouverture 120-1 après que le rotor 16 a déjà occupé une partie substantielle de l'espace interne au stator 14, un peu avant de parvenir dans sa position définitive qui délimite l'entrefer 42. Grâce au profil biseauté à l'entrée 120-1 de la bague 118, la paroi 218 peut commencer à pénétrer à l'intérieur de cette bague, même si l'arbre 31 présente un léger écart de centrage par rapport à l'axe 20. La paroi interne biseautée de l'ouverture 120 agit comme une surface de centrage ou came par rapport au palier qui poursuit sa pénétration, notamment contre d'éventuels efforts magnétiques transversaux exercés, pendant la phase d'introduction, par les parties aimantées, de part et d'autre de l'entrefer 42 en formation, entre le rotor 16 et le stator 14 de la machine. A partir de la position centrée au moment où l'arête 219 du palier atteint le point ou arête d'engagement 119 dans la bague 118, ces efforts tendent à se neutraliser et la surface extérieure 218 du palier 18 poursuit sa pénétration en glissant dans la bague de portée 118 jusqu'à venir buter contre la couronne 121 au fond de cette bague 118.

Dans cet exemple, la longueur de la surface biseautée à l'entrée de l'ouverture 120 peut être de quelques millimètres par exemple. Elle est déterminée de façon à laisser à la face axiale externe 218 du palier 18 une course longitudinale suffisante pour parvenir à un bon centrage, avant que l'arête 263 à l'extrémité de la paroi cylindrique externe 262 du rotor 162 du résolveur 160 n'atteigne l'entrée 265-1 de la cavité statorique dans une bonne position d'alignement. A partir du point de coïncidence axiale des arêtes rotorique 263 et statorique 265-1 du résolveur, l'équipage mobile emmené par l'arbre machine 31 poursuit sa course axiale jusqu'au point où sa face axiale du palier 18 limitée par l'arête 219 est bloquée par la couronne 121 au fond de la bague 118. A ce point l'assemblage est terminé et l'entrefer de résolveur 242 est complètement défini par les faces radiales en regard du rotor et du stator. La distance sur laquelle l'arbre 31 poursuit sa course, avant que le rotor résolveur ne parvienne à l'entrée du stator résolveur, est déterminée par la différence des distances D1 et D2. Elle peut être dans le cas de figure décrit de l'ordre de un ou deux millimètres, par exemple. On évite ainsi tout contact entre le rotor résolveur 162, relativement fragile, et son environnement dans le boîtier 11 pendant la phase d'introduction de l'arbre 16 dans ce dernier. L'observation de cet exemple montre que le rotor résolveur 162 présente un contour tronconique 173 en partant de l'arête 263 à l'extrémité de la paroi radiale externe cylindrique 262 vers l'extrémité libre de ce rotor Il s'agit d'une disposition prévue par le constructeur du résolveur.

En résumé, les figures 2, 3 et 4 permettent de bien comprendre la réalisation de l'invention et son fonctionnement à partir d'une représentation schématique de la machine et de ses différentes composantes. Sur la figure 2, un équipage mobile 300 comprend l'arbre 31 et le rotor 16 de la machine, représentés en un seul bloc, avec du côté d'une de ses extrémités le rotor 162 du resolver 160, calé à l'extrémité du prolongement 161 de l'arbre, et le palier 18, monté sur cet arbre entre le rotor 162 et le rotor machine 16. De l'autre côté de l'équipage 300 est monté le deuxième palier 19 avec sa bague extérieure centrée dans une portée 179 dans un flasque 170 destiné à assurer la fermeture de l'extrémité correspondante du boîtier 11.

On reconnaît dans ce boîtier 11 le stator 14 et le capot de fermeture 46, dans lequel est aménagé l'espace 59 ouvert axialement vers l'extérieur et où se trouve logé le stator 164 du résolveur 160. Cet espace 59 est fermé à son extrémité axiale externe par le couvercle 47 de manière à bloquer le stator 164 en position contre une face latérale 65 de l'anneau en saillie radiale 64. La face interne de cet anneau 64 est constituée par l'alésage 163 dont le diamètre est supérieur au diamètre extérieur du rotor de résolveur 162. La face latérale opposée 61 de l'anneau en saillie 64 constitue le fond d'un logement cylindrique 62 formé dans le capot 46 pour recevoir la bague de portée de palier 118. Dans cette représentation schématique, on reconnaît que la pièce de capot 46 et son extension interne, qui dans la figure 1 forme le flasque tronconique 60 pour le support de la portée de palier 18, ne sont pas ici individualisées.

Dans la position illustrée par la figure 2A, l'équipage mobile 300 n'est que partiellement rentré à l'intérieur du boîtier 11. Le palier 18 et le rotor résolveur 162 calé sur le prolongement de l'arbre 31 sont encore dans la cavité à l'intérieur du stator machine 14 du côté de l'extrémité du boîtier 11. La figure 2B, qui est une vue à la loupe de cette extrémité, (avec l'aide des désignations de référence de la figure 5) montre bien les positions respectives de l'équipage mobile et de la bague 118 en butée contre la face 61 de l'anneau en saillie 64 et prête à recevoir le palier 18, tandis que le stator de résolveur 164 est calé de l'autre côté de cet anneau en saillie dont la paroi cylindrique définit l'alésage 163 (fig. 5).

Les figures 3A et 3B illustrent les positions respectives de l'équipage mobile 300 et des pièces internes au boîtier 11 au moment de la course de l'arbre 31 où le palier 18 a commencé de pénétrer dans la bague 118. On voit sur la figure 3B que le profil interne 120 de cette bague a un diamètre à l'ouverture légèrement décroissant qui a permis de supprimer le jeu radial entre les flancs externe du palier 18 et interne de la bague 118 et d'assurer un centrage précis de l'arbre machine sur l'axe 20 pendant le début de la phase d'engagement du palier 18 dans la bague 118. On remarque également que, dans la position représentée à la figure 3B, la face d'extrémité externe 262 du rotor de résolveur est parvenue juste dans le plan 265 de l'ouverture d'entrée 265-1 de la cavité interne du stator 164 de résolveur et en position d'alignement pour pénétrer sans heurt dans ladite cavité. Il existe donc un décalage entre les postions longitudinales de l'arbre 31 au moment de l'engagement du palier 18 dans sa bague de portée 118 et de l'entrée de l'extrémité du rotor de résolveur 262 dans la cavité du stator 164. Pendant que l'arbre 31 couvre la distance de ce décalage, au moins en partie, le palier 18 se centre progressivement dans la bague 118 et les parties homologues du résolveur s'alignent mécaniquement pour parvenir à une positon où elles peuvent ensuite s'engager sans heurt l'une dans l'autre.

Dans les figures 4A et 4B, on retrouve les éléments des deux figures précédentes après que l'équipage mobile 300 a complètement pénétré dans le boîtier 11. Le flasque 170 est en position de fixation à l'extrémité du boîtier 11 pour fixer le palier 19 dans sa portée 179. Le rotor 16 de la machine est logé à l'intérieur de la cavité statorique. Le palier 18 est complètement inséré dans la bague de portée 118. Le rotor 162 du résolveur est en place à l'intérieur de la cavité statorique dans laquelle il avait commencé de pénétrer à la fin du parcours de la face 218 du palier 18 le long du biseau 120 de la bague 118.

L'invention n'est pas limitée à l'exemple décrit et représenté ci-dessus et notamment au mode de réglage du résolveur utilisé ici à titre d'exemple non limitatif pour illustrer l'invention. En particulier, elle peut s'appliquer également dans le cas où le réglage du résolveur s'effectue à partir d'un rotor de résolveur calé par construction sur l'arbre machine, avec un stator de résolveur dont la fixation dans le boîtier comporte un dispositif permettant d'ajuster la position angulaire du stator par rapport au rotor après la mise en place de ces éléments au montage. L'invention trouve donc application dans tous les cas où l'organisation de l'intérieur de la machine permet l'introduction dans le boîtier d'un équipage mobile portant toutes les pièces entraînées par l'arbre à partir d'un seul côté de ce boîtier et où cette faculté est utile pour faciliter le montage ou le remontage de la machine électrique tournante. D'autres modifications peuvent être apportées aux dispositions décrites dans l'exemple sans pour autant sans sortir du cadre tel que défini par les revendications annexées.

## Revendications

1. Machine électrique tournante comportant:
• un boîtier (11);
• un stator (14) de machine fixé au boîtier;
• un rotor (16) de machine dans le stator machine sur un arbre (31), ledit arbre (31) définissant un axe de rotation de la machine, ledit arbre étant monté, d'un côté dudit rotor, dans un palier de rotation (18) calé axialement sur l'arbre et centré dans une portée (118) liée au boîtier dans laquelle le rotor (16) peut être inséré dans le boîtier par un mouvement relatif entre stator et rotor parallèle à l'axe de la machine ;
• un passage interne (163), dans le boîtier, traversé par un prolongement dudit arbre (31) au delà dudit palier de rotation (18) ; et
• un résolveur (160) comprenant un rotor (162) de résolveur dont le diamètre externe est inférieur à celui dudit passage interne (163), qui est fixé sur ledit prolongement (161) de l'arbre machine et propre à s'introduire dans la cavité d'un stator (164) de résolveur lors dudit mouvement relatif, pour y constituer un entrefer (242) de résolveur entre les parois radiales en regard desdits rotor et stator résolveur,
ladite machine étant **caractérisée en ce que** la distance D1, mesurée le long de l'axe de l'arbre (31), entre les positions (i) du point d'engagement (219) de la paroi radiale externe (218) du palier de rotation (18), avec la portée (118) correspondante dans le boîtier, le plus avancé vers l'extrémité libre dudit prolongement (161), d'une part, et (ii) du point ou arête (263) du secteur de diamètre maximum dans la paroi radiale externe (262) du rotor résolveur (162), qui est le plus avancé vers l'extrémité libre dudit prolongement (161), d'autre part, est inférieure à la distance D2, mesurée axialement dans le boîtier, entre les positions (i) du point d'engagement (119) de la paroi radiale interne (120) de ladite portée (118), avec la paroi radiale externe (218) du palier de rotation (18), le plus avancé dans la direction dudit stator machine (14), d'une part, et (ii) du point ou arête (265-1) du secteur de diamètre minimum, dans la paroi radiale interne (165) du stator résolveur (164), qui est le plus avancé, dans la direction dudit stator machine (14), d'autre part.

2. Machine électrique tournante selon la revendication 1, **caractérisée en ce qu'**elle comprend en outre une interface de centrage entre le palier de rotation (18) de l'arbre machine et la portée (118) correspondante dans le boîtier, dans laquelle la paroi radiale externe (218) du palier, du côté de l'extrémité libre du prolongement d'arbre (161), présente un premier secteur (219) propre à entrer en contact avec un deuxième secteur dans la paroi radiale interne (120) de la portée (118) du palier de rotation du côté du stator machine (14) dans la dans le boîtier (11) et **en ce que** l'une au moins desdits premier et deuxième secteurs est profilée avec un diamètre décroissant axialement dans la direction longitudinale allant de la machine (14, 16) vers le résolveur (160).

3. Machine électrique tournante selon la revendication 2, **caractérisée en ce que** dans le deuxième secteur la paroi radiale interne (120) de la portée (118) du palier de rotation a un diamètre décroissant axialement dans la direction longitudinale allant de la machine (14, 16) vers le résolveur (160).

4. Machine selon l'une des revendications 1 à 3, **caractérisée en ce que** l'espace intérieur à ladite portée (118) du palier de rotation (18) dans le boîtier est limité axialement du côté opposé au stator machine par une butée (121) en forme de couronne autour dudit passage (163) traversé par l'arbre machine (31), dont le diamètre interne est supérieur au diamètre externe du rotor resolver (162) mais inférieur au diamètre de la paroi radiale externe (218) du palier de rotation (18).

## Patentansprüche

1. Elektrische Rotationsmaschine, welche aufweist:
• ein Gehäuse (11);
• einen Maschinenstator (14), der an dem Gehäuse befestigt ist;
• einen Maschinenrotor (16) in dem Maschinenstator auf einer Welle (31), wobei die Welle (31) eine Drehachse der Maschine definiert, wobei die Welle auf einer Seite des Rotors in einem Rotationslager (18) gelagert ist, das auf der Welle axial blockiert ist und in einem mit dem Gehäuse verbundenen Lagersitz (118) zentriert ist, in welchen der Rotor (16) durch eine zu der Achse der Maschine parallele relative Bewegung zwischen Stator und Rotor in das Gehäuse eingesetzt werden kann;
• einen inneren Durchgang (163) in dem Gehäuse, der von einer Verlängerung der Welle (31) über das Rotationslager (18) hinaus durchquert wird;
und
• einen Drehmelder (160), der einen Drehmelderrotor (162) aufweist, dessen Außendurchmesser kleiner als derjenige des inneren Durchgangs (163) ist, der an der Verlängerung (161) der Maschinenwelle befestigt ist und geeignet ist, bei der relativen Bewegung in den Hohlraum eines Drehmelderstators (164) eingeführt zu werden, um dort einen Drehmelderluftspalt (242) zwischen den einander gegenüberliegenden radialen Wänden des Drehmelderrotors und des Drehmelderstators zu bilden,
wobei die Maschine **dadurch gekennzeichnet ist, dass** der entlang der Achse der Welle (31) gemessene Abstand D1 zwischen den Positionen (i) des Anlagepunktes (219) der äußeren radialen Wand (218) des Rotationslagers (18) an dem entsprechenden Lagersitz (118) in dem Gehäuse, der am weitesten zu dem freien Ende der Verlängerung (161) hin angeordnet ist, einerseits, und (ii) des Punktes oder der Kante (263) des Sektors mit maximalem Durchmesser in der äußeren radialen Wand (262) des Drehmelderrotors (162), welcher am weitesten zu dem freien Ende der Verlängerung (161) hin angeordnet ist, andererseits, kleiner ist als der axial in dem Gehäuse gemessene Abstand D2 zwischen den Positionen (i) des Anlagepunktes (119) der inneren radialen Wand (120) des Lagersitzes (118) an der äußeren radialen Wand (218) des Rotationslagers (18), der am weitesten in der Richtung des Maschinenstators (14) angeordnet ist, einerseits, und (ii) des Punktes oder der Kante (265-1) des Sektors mit minimalem Durchmesser in der inneren radialen Wand (165) des Drehmelderstators (164), welcher am weitesten in der Richtung des Maschinenstators (14) angeordnet ist, andererseits.

2. Elektrische Rotationsmaschine nach Anspruch 1, **dadurch gekennzeichnet, dass** sie außerdem eine Zentrierschnittstelle zwischen dem Rotationslager (18) der Maschinenwelle und dem entsprechenden Lagersitz (118) in dem Gehäuse aufweist, in welcher die äußere radiale Wand (218) des Lagers auf der Seite des freien Endes der Wellenverlängerung (161) einen ersten Sektor (219) aufweist, der dafür eingerichtet ist, mit einem zweiten Sektor in der inneren radialen Wand (120) des Lagersitzes (118) des Rotationslagers auf der Seite des Maschinenstators (14) in dem Gehäuse (11) in Kontakt zu kommen, und dadurch, dass der erste und/oder der zweite Sektor mit einem axial in der Längsrichtung von der Maschine (14, 16) zu dem Drehmelder (160) hin abnehmenden Durchmesser profiliert ist.

3. Elektrische Rotationsmaschine nach Anspruch 2, **dadurch gekennzeichnet, dass** in dem zweiten Sektor die innere radiale Wand (120) des Lagersitzes (118) des Rotationslagers einen axial in der Längsrichtung von der Maschine (14, 16) zu dem Drehmelder (160) hin abnehmenden Durchmesser aufweist.

4. Maschine nach einem der Ansprüche 1 bis 3, **dadurch gekennzeichnet, dass** der innere Raum des Lagersitzes (118) des Rotationslagers (18) in dem Gehäuse axial auf der dem Maschinenstator gegenüberliegenden Seite durch einen kranzförmigen Anschlag (121) um den von der Maschinenwelle (31) durchquerten Durchgang (163) herum begrenzt ist, dessen Innendurchmesser größer als der Außendurchmesser des Drehmelderrotors (162), jedoch kleiner als der Durchmesser der äußeren radialen Wand (218) des Rotationslagers (18) ist.

## Claims

1. Rotating electrical machine comprising:
• a casing (11);
• a machine stator (14) attached to the casing;
• a machine rotor (16) in the machine stator on a shaft (31), the said shaft (31) defining a rotation axis of the machine, the said shaft being mounted, on one side of the said rotor, in a rotation bearing (18) secured axially on the shaft and centred in a bearing surface (118) connected to the casing in which the rotor (16) can be inserted into the casing by a relative movement between the stator and rotor parallel to the axis of the machine;
• an internal passageway (163), in the casing, traversed by an extension of the said shaft (31) beyond the said rotation bearing (18);
and
• a resolver (160) comprising a resolver rotor (162) of which the external diameter is smaller than that of the said internal passageway (163), which is attached to the said extension (161) of the machine shaft and is suitable for being inserted into the cavity of a resolver stator (164) during the said relative movement, in order to constitute therein a resolver air gap (242) between the radial walls facing the said resolver rotor and stator,
the said machine being **characterized in that** the distance D1, measured along the axis of the shaft (31), between the positions (i) of the engagement point (219) of the external radial wall (218) of the rotation bearing (18), with the corresponding supporting surface (118) in the casing, that is the most advanced towards the free end of the said extension (161), on the one hand, and (ii) of the point or ridge (263) of the sector of maximum diameter in the external radial wall (262) of the resolver rotor (162), that is the most advanced towards the free end of the said extension (161), on the other hand, is less than the distance D2, measured axially in the casing, between the positions (i) of the engagement point (119) of the internal radial wall (120) of the said supporting surface (118), with the external radial wall (218) of the rotation bearing (18) that is the most advanced in the direction of the said machine stator (14), on the one hand, and (ii) of the point or ridge (265-1) of the sector of minimum diameter, in the internal radial wall (165) of the resolver stator (164) that is the most advanced, in the direction of the said machine stator (14), on the other hand.

2. Rotating electrical machine according to Claim 1, **characterized in that** it also comprises a centring interface between the rotation bearing (18) of the machine shaft and the corresponding supporting surface (118) in the casing, in which the external radial wall (218) of the bearing, on the side of the free end of the shaft extension (161), has a first sector (219) suitable for coming into contact with a second sector in the internal radial wall (120) of the supporting surface (118) of the rotation bearing on the side of the machine stator (14) in the casing (11) and **in that** at least one of the said first and second sectors is profiled with a diameter that decreases axially in the longitudinal direction going from the machine (14, 16) to the resolver (160).

3. Rotating electrical machine according to Claim 2, **characterized in that** in the second sector, the internal radial wall (120) of the supporting surface (118) of the rotation bearing has a diameter that decreases axially in the longitudinal direction going from the machine (14, 16) to the resolver (160).

4. Machine according to one of Claims 1 to 3, **characterized in that** the space that is internal to the said supporting surface (118) of the rotation bearing (18) in the casing is limited axially on the side opposite to the machine stator by an abutment (121) that is crown-shaped around the said passageway (163) traversed by the machine shaft (31), of which the internal diameter is greater than the external diameter of the resolver rotor (162) but less than the diameter of the external radial wall (218) of the rotation bearing (18).
